# EUROPEAN PATENT APPLICATION

(11) **EP 2 679 791 A1**
(43) Date of publication of application: **01.01.2014**
(21) Application number: 12749602.4
(22) Date of filing: 14.02.2012
(51) Int. Cl.: F02F 3/10, F01L 3/02, F02B 77/11, F02F 1/24, F02F 3/00, F16J 1/01

(54) **ENGINE AND PISTON**

(30) Priority: 23.02.2011 JP 2011036501
(71) Applicant: Aisin Seiki Kabushiki Kaisha, Aichi 448-8650 (JP); Akros Co., Ltd., Aichi 485-0077 (JP)
(72) Inventor: HIRATSUKA, Ichiro, Kariya-shi Aichi 448-8650 (JP); NIIMI, Takuya, Kariya-shi Aichi 448-8650 (JP); MAKINO, Shin, Komaki-shi Aichi 485-0077 (JP); SAAI, Kazuki, Komaki-shi Aichi 485-0077 (JP)
(74) Representative: TBK
(86) International application number: PCT/JP2012/000964
(87) International publication number: WO 2012/114676

(57) **Abstract**

An engine includes a cylinder block having a bore, a piston fitted into the bore so as to form a combustion chamber and to be able to reciprocate, a cylinder head for closing the combustion chamber and having valve bores communicating with the combustion chamber, and valves for opening and closing the valve bores. A heat insulating coating is applied on a wall face of at least one of the piston, the cylinder head, and the valves and facing the combustion chamber. The heat insulating coating includes resin and a plurality of hollow nanoparticles embedded in the resin, smaller in diameter than a thickness of the heat insulating coating, and smaller than or equal to 500 nanometers in size.

## Description

### TECHNICAL FIELD

The present invention relates to an engine and a piston with improved heat insulation of a combustion chamber.

### BACKGROUND ART

An engine includes a cylinder block having a bore, a piston fitted into the bore so as to form a combustion chamber and to be able to reciprocate, a cylinder head which closes the combustion chamber and has a valve bore communicating with the combustion chamber, and a valve for opening and closing the valve bore. In order to improve fuel efficiency, it is preferable to improve heat insulation of the combustion chamber. Especially in a vehicle, such as a hybrid vehicle and a vehicle having an idling stop function, which is intended to improve the fuel efficiency, driving of the engine may be stopped temporarily during traveling or a brief stop of the vehicle in some cases. In these cases, because a temperature of the combustion chamber in the engine is likely to reduce, there is a limit on the improvement of the fuel efficiency of the engine.

Patent Document 1 discloses a ceramic heat insulating film formed by dispersing ceramic hollow particles with a low heat transfer coefficient inside an inorganic binder (e.g., zirconia and alumina). Patent Document 2 discloses an engine in which a heat insulating coating made of porous material formed by a ceramic solution film is formed on a top of a piston. Patent Document 3 discloses a piston having a top of a piston main body and covered with a low heat conductive member. In this piston, the low heat conductive member is made of metal material (e.g., titanium) with lower heat conductivity than aluminum material forming the piston main body and forms an air film for heat insulation between the top of the piston main body and the low heat conductive member. Patent Document 4 discloses an engine in which heat insulating material such as ceramics is provided to a top of a piston.

### PRIOR ART DOCUMENTS

### PATENT DOCUMENTS

Patent Document 1: Japanese Patent Application Laid-Open No. 2010-185290
Patent Document 2: Japanese Patent Application Laid-Open No. 2010-71134
Patent Document 3: Japanese Patent Application Laid-Open No. 2005-76471
Patent Document 4: Japanese Patent Application Laid-Open No. 2009-30458

With the techniques according to the above-described patent documents, there is a limit on formation of a heat insulating coating having high heat insulation and high surface smoothness and there is a limit on improvement of fuel efficiency of the engine. Furthermore, sprayed heat insulating material is employed in each of Patent Documents 2 and 4 and thermal spraying results in a rougher face after a thermal spraying treatment than before the thermal spraying treatment. Therefore, if ceramic is sprayed the top of the piston, microscopic bumps of the rough surface serve as heat spots to cause ignition, which is liable to cause knocking in the engine. Moreover, the ceramic spraying forms a hard film and therefore post-work of the film is difficult.

### SUMMARY OF THE INVENTION

### PROBLEMS TO BE SOLVED BY THE INVENTION

The present invention has been made with the above-described circumstances in view and its object is to provide an engine and a piston which have a heat insulating coating for suppressing knocking and having high heat insulation and high surface smoothness and therefore which can contribute to improvement of fuel efficiency.

### SOLUTIONS TO THE PROBLEMS

(1) An engine according to the present invention includes a cylinder block having a bore, a piston fitted into the bore so as to form a combustion chamber and to be able to reciprocate, a cylinder head for closing the combustion chamber and having a valve bore communicating with the combustion chamber, and a valve for opening and closing the valve bore. A heat insulating coating is applied on a wall face of at least one of the piston, the cylinder head, and the valve and facing the combustion chamber and the heat insulating coating includes resin and a plurality of hollow nanoparticles embedded in the resin, smaller in diameter than a thickness of the heat insulating coating, and smaller than or equal to 500 nanometers in size.

The heat insulating coating includes the resin and the plurality of hollow nanoparticles embedded in the resin and smaller in diameter than the thickness of the heat insulating coating. Because the heat insulating coating has high voidage and high heat insulation, it can improve heat insulation of the combustion chamber and contribute to improvement of fuel efficiency of the engine.

If a ceramic sprayed film is applied on the top face of the piston and facing the combustion chamber in the engine, there is a limit on suppression of the surface roughness of the ceramic sprayed film. Therefore, if the ceramic sprayed film is seen microscopically, a large number of microscopic bumps are formed on a surface of the sprayed film, which faces the combustion chamber. Such bumps trigger a combustion stroke of the engine and may cause a problem of increased possibility of occurrence of knocking in the engine. In this point, according to the invention of the present application, the heat insulating coating includes the resin and has high surface smoothness unlike the ceramic sprayed film and the like, which enhances antiknock performance of the engine.

In the engine according to the invention, the heat insulating coating has the resin and the plurality of hollow nanoparticles embedded in the resin and smaller in diameter than the thickness of the heat insulating coating. Therefore, combined effect of the resin and the hollow nanoparticles can be expected. In other words, because the hollow nanoparticles are nanosized, they have property of being difficult to break. When the surface of the heat insulating coating receives pressure in the combustion chamber during the expansion stroke, the combined effect of the resin and the hollow nanoparticles can be expected. In addition, it is expected that the pressure received by the resin can be lessened with small elastic deformation of the hollow nanoparticles while strength of the heat insulating coating is maintained. As a result, the resin of the heat insulating coating becomes less liable to crack. According to experiments carried out by the present inventors, if a heat insulating coating was made of only resin and did not include hollow nanoparticles, the heat insulating coating was liable to crack.

(2) In the engine according to the invention, preferably, the thickness of the heat insulating coating is 10 to 2000 micrometers and the size of the hollow nanoparticles is 10 to 500 nanometers. It is possible to improve dispersibility for dispersing the hollow nanoparticles in the heat insulating coating to thereby efficiently embed the hollow nanoparticles in the resin of the heat insulating coating.

(3) In the engine according to the invention, the resin is preferably at least one of epoxy resin, amino resin, polyaminoamide resin, phenol resin, xylene resin, furan resin, silicone resin, polyetherimide, polyether sulfone, polyether ketone, polyether ether ketone, polyamideimide, polybenzimidazole, thermoplastic polyimide, and non-thermoplastic polyimide. With such resins, operation according to the invention can be expected effectively.

Resin with a high heat proof temperature and a high pyrolysis temperature is preferable. Furthermore, in consideration of heat resistance and the pyrolysis temperature, epoxy resin, silicone resin, polyetherimide, polyether sulfone, polyether ketone, polyether ether ketone, and polyamideimide are preferable. For use in a high-temperature environment, polybenzimidazole, thermoplastic polyimide, and non-thermoplastic polyimide are more preferable. Moreover, thermoplastic polyimide, and non-thermoplastic polyimide obtained from pyromellitic acid dianhydride or biphenyltetracarboxylic acid dianhydride excellent in heat resistance are yet more preferable. By using the resin as a binder and mixing nanosized hollow nanoparticles (of smaller than 1 micrometer) into it, it is possible to increase voidage of the heat insulating coating to thereby secure heat insulation of the heat insulating coating.

(4) A piston according to the invention is a piston to be fitted into a bore so as to form a combustion chamber and to be able to reciprocate. A heat insulating coating is applied on a wall face of the piston and facing the combustion chamber and the heat insulating coating includes resin and a plurality of hollow nanoparticles embedded in the resin, smaller in diameter than a thickness of the heat insulating coating, and smaller than or equal to 500 nanometers in size.

In the piston according to the invention, the heat insulating coating has the resin and the plurality of hollow nanoparticles embedded in the resin and smaller in diameter than the thickness of the heat insulating coating. Therefore, combined effect of the resin and the hollow nanoparticles can be expected. In other words, because the hollow nanoparticles are nanosized, they have property of being difficult to break. When the surface of the heat insulating coating receives pressure in the combustion chamber during the expansion stroke, the combined effect of the resin and the hollow nanoparticles can be expected. In addition, it is expected that the pressure received by the resin can be lessened with elastic deformation of the hollow nanoparticles. As a result, the resin of the heat insulating coating becomes less liable to crack. According to other experiments carried out by the present inventors, if a heat insulating coating was made of only resin and did not include hollow nanoparticles, the heat insulating coating was liable to crack.

### EFFECTS OF THE INVENTION

According to the invention, employment of the heat insulating coating having high heat insulation and high surface smoothness improves heat insulation of the combustion chamber and contributes to improvement of fuel efficiency of the engine. Furthermore, because the surface smoothness of the top of the piston can be increased, it is possible to suppress knocking of the engine.

According to the invention, because the heat insulation of the combustion chamber of the engine can be improved as described above, thermal efficiency of the engine at the time of cold start is improved and the fuel efficiency of the engine is improved. In general, at the time of the cold start of the engine, fuel is not vaporized well and therefore a larger amount of fuel (such as gasoline) than usual is sent into the combustion chamber. However, if the heat insulating coating according to the invention is provided, it is possible to effectively carry out heat insulation of the combustion chamber of the engine to thereby improve vaporization of the fuel to improve the fuel efficiency. Especially in hybrid vehicles and idling stop vehicles which are increasing in number in recent years, the engine is not sufficiently warmed up due to intermittent operation of the engine. In this case, the heat insulating coating according to the invention exerts the effect and it is easy to maintain the combustion chamber of the engine at high temperature. Moreover, because combustion heat in the combustion chamber is less liable to escape into the piston, the cylinder block, the cylinder head, and the like, combustion temperature in the combustion chamber increases and an effect on reduction of HC (hydrocarbon) included in exhaust gas can be expected as well.

### BRIEF DESCRIPTION OF THE DRAWINGS

FIG. 1 is a sectional view according to a first embodiment and schematically showing an area around a combustion chamber of an engine.
FIG. 2 is a sectional view according to the first embodiment and schematically showing an area around a heat insulating coating formed on a top of a piston.
FIG. 3 is a sectional view according to a second embodiment and schematically showing an area around a combustion chamber of an engine.
FIG. 4 is a drawing schematically showing a test in which a top side of a piston is heated.
FIG. 5 is a graph showing a relationship between heating time and temperature in the test in which the top side of the piston is heated.
FIG. 6 is a graph showing a relationship between the heating time and temperature increase rate in the test in which the top side of the piston is heated.
FIG. 7 is a graph showing fuel efficiency and an effect of reducing a harmful substance in exhaust gas obtained by the heat insulating coating.

### MODES FOR CARRYING OUT THE INVENTION

According to preferred embodiments of the present invention, it is possible to form a heat insulating coating on a top of each piston and facing a combustion chamber by mixing hollow nanoparticles into resin. This improves thermal efficiency of the engine and fuel efficiency of a vehicle. Resin material preferably has adhesiveness, heat resistance, chemical resistance, and strength. The resin may be amino resin, polyaminoamide resin, phenol resin, xylene resin, furan resin, and the like. Furthermore, in consideration of heat resistance and pyrolysis temperature, epoxy resin, silicone resin, polyetherimide, polyether sulfone, polyether ketone, polyether ether ketone, and polyamideimide are preferable. For use in a high-temperature environment, polybenzimidazole, thermoplastic polyimide, and non-thermoplastic polyimide are preferable. Moreover, thermoplastic polyimide, and non-thermoplastic polyimide obtained from pyromellitic acid dianhydride or biphenyltetracarboxylic acid dianhydride excellent in heat resistance are more preferable. By using the resin as a binder and mixing nanosized hollow nanoparticles (of smaller than 1 micrometer) into it, it is possible to increase voidage of the heat insulating coating to thereby secure heat insulation of the heat insulating coating. The resin may include inorganic material (e.g., alumina, titania, and zirconia). The inorganic material may be in forms of powder particles or fibers. With regard to size of the inorganic material, it preferably has about the same particle diameter as or a smaller particle diameter than the hollow nanoparticles.

If an apparent volume of the heat insulating coating is 100%, voidage in the heat insulating coating is preferably 5 to 50% by volume. Specifically, 7 to 45% and 10 to 40% are suggested as examples. The voidage corresponds to an amount of the hollow nanoparticles to be mixed and influences heat insulation of the heat insulating coating. If the amount of the hollow nanoparticles to be mixed is large, the voidage is high and the heat insulation of the heat insulating coating is high. Here, if the voidage is excessively low, the heat insulation of the heat insulating coating reduces. If the voidage is excessively high, a ratio of the hollow nanoparticles to the resin becomes excessively high and the binder for binding the hollow nanoparticles becomes insufficient, which may impair a film forming characteristic of the heat insulating coating or reduce strength of the heat insulating coating.

Surface roughness of a wall face after application of the heat insulating coating is preferably smaller than the surface roughness before the application. Material of the hollow nanoparticles is preferably ceramic or organic material. Especially, silica (SiO₂), alumina (Al₂O₃), zirconia (ZrO₂), and titania (TiO₂) excellent in heat resistance are preferable. In some cases, the material of the hollow nanoparticles may be resin or metal.

An average particle diameter of the hollow nanoparticles can be 10 to 500 nanometers and preferably 20 to 300 nanometers and 30 to 150 nanometers. The size of the hollow nanoparticles is preferably smaller than a thickness of an oil film formed between a skirt portion of the piston and a cylinder bore wall face. This is for suppressing damage to them, even when the hollow nanoparticles come off the heat insulating coating. As examples of a thickness of a shell of the hollow nanoparticle, 0.5 to 50 nanometers, 1 to 30 nanometers, and preferably 5 to 15 nanometers can be suggested depending on the particle diameter of the hollow nanoparticle. A shape of the hollow nanoparticle may be a true sphere, an approximate sphere, an approximate oval sphere, an approximate polygon (including an approximate cube and an approximate rectangular parallelepiped), and the like. A surface of the shell forming the hollow nanoparticle may be smooth or may have microscopic asperities.

With hollow particles of large size of several to several hundred micrometers, there is a limit to the amount of the hollow particles to be mixed and it is difficult to obtain high heat insulation while making the heat insulating coating thin. Moreover, if the hollow particles of large size rise in a vicinity of the surface of the heat insulating coating, asperities of the surface of the heat insulating coating become large to reduce surface smoothness. If the asperities of the surface of the heat insulating coating become large in this manner, microscopic bumps on the surface of the heat insulating coating serve as heat spots and knocking of the engine is liable to occur. Furthermore, if the hollow particles come off the resin for some reasons, the hollow particles of large size of several to several hundred micrometers are larger than the thickness (about 0.5 to 1 micrometer) of the oil films on sliding portions of the engine and are harder than the materials of the piston and the cylinder and therefore may wear the piston and the cylinder. On the other hand, according to the present embodiment, a large amount of hollow particles of super microscopic size of smaller than 500 nanometers (e.g., about 10 to 500 nanometers) can be filled into the resin (binder), the microscopic voids due to the hollow nanoparticles can be dispersed, and the heat insulation of the heat insulating coating can be secured, even if the heat insulating coating is a thin film. If the hollow nanoparticles are nanosized, the asperities on the surface of the heat insulating coating formed by the hollow nanoparticles become extremely small, the surface of the heat insulating coating becomes smooth due to leveling action of the resin which serves as the binder, and it is possible to enhance antiknock performance of the engine. In consideration of the antiknock performance, the surface roughness of the heat insulating coating is preferably 10.0 or smaller and 7.0 or smaller in terms of Ra. Surface roughness of 5.0 or smaller or 3.0 or smaller is preferable. Surface roughness of 2. 0 or smaller is more preferable. Moreover, even if the hollow nanoparticles come off the resin, they are of the above-described size smaller than the thickness of the oil film and therefore get covered with the oil films and are less liable to damage the wall faces of the skirt portion of the piston and the bore of the cylinder block.

In order to secure the heat insulation, adhesion, and voidage, thickness of the heat insulating coating is preferably 10 to 2000 micrometers and 20 to 1000 micrometers. It may be 50 to 700 micrometers or 100 to 500 micrometers. As examples of an upper limit of the thickness of the heat insulating coating, 2000 micrometers, 1000 micrometers, 800 micrometers, 500 micrometers, and 300 micrometers can be suggested. As examples of a lower limit of the thickness of the heat insulating coating, 20 micrometers, 30 micrometers, and 40 micrometers can be suggested. If the thickness of the heat insulating coating/the diameter of the hollow nanoparticles (in the same unit) is "α", a range from 200000 to 20, a range from 50000 to 20, and a range from 30000 to 100 can be suggested as examples of "α". In this case, dispersibility of the hollow nanoparticles in the heat insulating coating can be improved, which advantageously improves heat insulation of the heat insulating coating and reduces nonuniform heat insulation.

If the low heat conductive member such as titanium is used as in Patent Document 3 described above, thickness of few millimeters is required because of a structure. In this case, increase in weight of the piston is unavoidable, which is not preferable because it inhibits movement of the piston moving at high speed and improvement of fuel efficiency. On the other hand, as shown in Table 1, the heat insulating coating according to the invention includes the resin and advantageously has a smaller specific gravity than an aluminum alloy. Here, heat insulation obtained by titanium having thickness of 7 millimeters, for example, corresponds to heat insulation by the thickness of 1.65 millimeters in a case of a zirconia sprayed film and corresponds to heat insulation by the thickness of as small as 0.021 to 0.091 millimeters in the case of the heat insulating coating according to the invention. In this manner, the heat insulating coating according to the invention can be made thin while securing the heat insulation. Therefore, if the heat insulating coating is formed on the top of the piston, the heat insulation on the top side of the piston can be improved while increase in the weight of the piston is extremely small and does not affect operation of the piston.

**Table 1**

| Material | Specific gravity | Heat conductivity (W/mK) | Required film thickness (mm) |
|---|---|---|---|
| Aluminum alloy (piston) | 2.7 | 130 | - |
| Titanium (Patent Document 3) | 4.5 | 17 | 7 (Estimate value) |
| Sprayed zirconia (Patent Documents 2, 4) | 6.0 | 4 | 1.65 |
| Heat insulating coating according to the invention | 1.0 to 1.8 | 0.05 to 0.22 | 0.021 to 0.091 |

As described above, because the plurality of hollow nanoparticles are embedded in the heat insulating coating according to the invention, high voidage and high heat insulation can be secured. Therefore, heat insulation of the combustion chamber can be improved. If the heat insulating coating according to the invention is applied on the wall face (the wall face facing the combustion chamber), it is easy to form the film on the wall face. Moreover, because the nanosized hollow nanoparticles are mixed into the resin, the leveling action of paint is not impaired. Because the surface roughness of the heat insulating coating after the application is smaller than the surface roughness of the piston before the application, a specific surface area of the piston becomes small, heat transfer from the piston is suppressed, and heat insulation performance of the piston can be further enhanced.

The heat insulating coating according to the invention may include additives if needed in addition to the resin and the hollow nanoparticles. As the additives, dispersants for increasing dispersibility of the hollow nanoparticles, silane coupling agents for assisting increase of affinity for the mixed powder and increase of adhesiveness, leveling agents for adjusting surface tension, surfactants, thickeners for adjusting thixotropic nature, and the like may be used if needed.

To form the heat insulating coating according to the invention, the paint can be formed by dissolving the resin in solvent to reduce viscosity of the resin and mixing and dispersing the hollow nanoparticles into the resin. For the dispersion, an ultrasonic disperser, a wet jet mill, a homogenizer, a three-roll mill, a high-speed stirrer, or the like can be used. The heat insulating coating according to the invention can be formed by applying the paint on the wall face forming the combustion chamber to form a coating and baking the coating. Forms of painting may be known forms such as spray painting, brush painting, roller painting, a roll coater, electrostatic painting, dip painting, screen printing, and pat printing. After the painting, the coating is heated and retained to be baked and the heat insulating coating is obtained. A baking temperature may be set according to the material of the resin and the like and may be 130 to 220°C, 150 to 200°C, and 170 to 190°C. As examples of baking time, 0.5 to 5 hours, 1 to 3 hours, and 1.5 to 2 hours can be suggested. It is preferable to give preliminary treatment such as shot blasting, etching, and chemical conversion treatment onto the wall face of the piston or the like before forming the heat insulating coating.

Moreover, the heat insulating coating according to the invention may be formed only on the top of the piston or on the wall face of the cylinder head and facing the combustion chamber. Furthermore, the heat insulating coating according to the invention may be formed also on wall faces, forming the combustion chamber, of valves for opening and closing valve bores for intake and exhaust. In this case, it is possible to improve the heat insulation of the combustion chamber. As the engine, an internal combustion engine, a reciprocating engine, and the like can be used. As fuel used in the engine, gasoline, light oil, LPG, and the like can be used.

### First embodiment

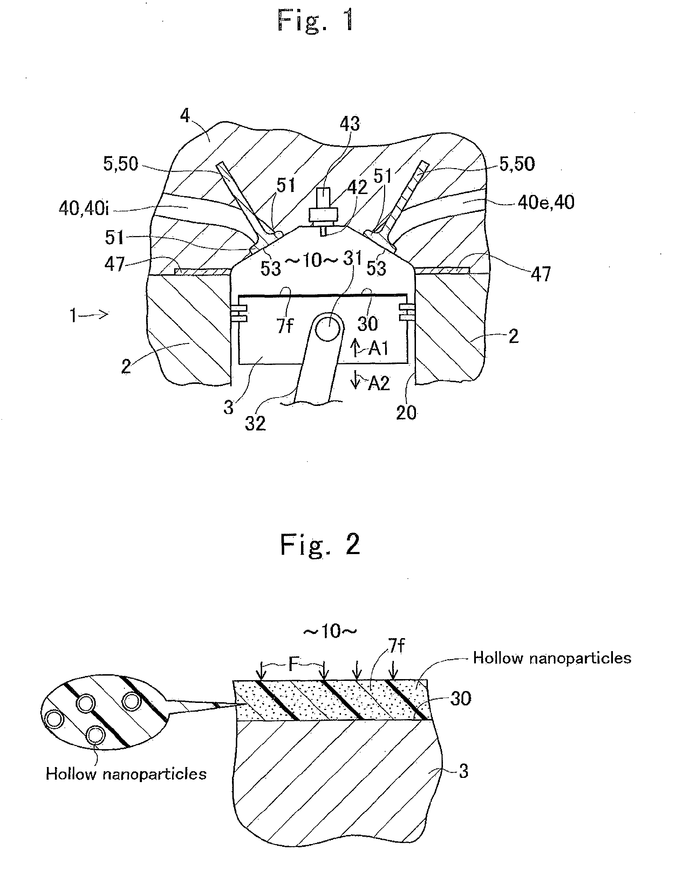

FIGS. 1 and 2 schematically show a concept of a first embodiment. FIG. 1 schematically shows a section near a combustion chamber 10 of an engine 1. The engine 1 is a piston-type internal combustion engine. FIGS. 1 and 2 are merely conceptual sketches and not intended to specify the details. The engine 1 includes a cylinder block 2 having a bore 20, a piston 3 fitted into the bore 20 so as to form the combustion chamber 10 on a top 30 side and to be able to reciprocate in directions of arrows A1 and A2, a cylinder head 4 for closing the combustion chamber 10 and having valve bores 40 communicating with the combustion chamber 10, and valves 5 for opening and closing the valve bores 40. The valve bores 40 include an intake valve bore 40i and an exhaust valve bore 40e which can communicate with the combustion chamber 10. The cylinder head 4 is mounted to the cylinder block 2 with a gasket 47 interposed therebetween. The cylinder block 2, the cylinder head 4, and the piston 3 are made of an aluminum alloy by casting. As the aluminum alloy, an aluminum-silicon alloy, an aluminum-silicon-magnesium alloy, an aluminum-silicon-copper alloy, an aluminum-silicon-magnesium-copper alloy, and an aluminum-silicon-magnesium-copper-nickel alloy are preferable. Hypoeutectic composition, eutectic composition, and hypereutectic composition may be employed as well. Depending on circumstances, at least one of the cylinder block 2, the cylinder head 4, and the piston 3 may be made of a magnesium alloy or cast iron (including flake graphite cast iron and spherical graphite cast iron, for example).

As shown in FIGS. 1 and 2, a first heat insulating coating 7f (thickness: 20 to 1000 micrometers) is applied on an entire or substantially entire area of the top 30 which is a wall face of the piston 3 and facing the combustion chamber 10. In this case, it is preferable to form the first heat insulating coating 7f only on the top 30 of the piston 3. In consideration of wear and the like, it is preferable not to form the heat insulating coating on an outer wall face of a skirt portion of the piston 3.

The first heat insulating coating 7f includes resin and a plurality of hollow nanoparticles (ceramic balloons such as silica balloons and alumina balloons) embedded in the resin. An average diameter of the hollow nanoparticles can be 10 to 500 nanometers or smaller and especially 30 to 150 nanometers. However, the average diameter is not limited to them. Thickness of the shell of the hollow nanoparticle can be 1 to 50 nanometers and 5 to 15 nanometers. The average diameter is a simple average based on observation with an electron microscope. A lower limit of the diameter of the hollow nanoparticle can be 8 or 9 nanometers and an upper limit can be 600 or 800 nanometers by the observation with the electron microscope.

The resin may be amino resin, polyaminoamide resin, phenol resin, xylene resin, furan resin, and the like depending on circumstances. Furthermore, in consideration of heat resistance and pyrolysis temperature, epoxy resin, silicone resin, polyetherimide, polyether sulfone, polyether ketone, polyether ether ketone, and polyamideimide are preferable. For use in a high-temperature environment, polybenzimidazole, thermoplastic polyimide, and non-thermoplastic polyimide are preferable. Moreover, thermoplastic polyimide, and non-thermoplastic polyimide obtained from pyromellitic acid dianhydride or biphenyltetracarboxylic acid dianhydride excellent in heat resistance are more preferable.

The first heat insulating coating 7f is formed on the top 30 of the piston 3 and facing the combustion chamber 10. In this case, a large amount of hollow particles of super microscopic size of smaller than 500 nanometers can be filled into the resin (binder) and microscopic voids due to the hollow nanoparticles can be dispersed. Therefore, even if the heat insulating coating is a thin film, the heat insulation of the heat insulating coating and the heat insulation of the combustion chamber 10 can be secured.

As a result, escape of heat in the combustion chamber 10 toward the cylinder block 2 through the piston 3 is suppressed, which improves the heat insulation of the combustion chamber 10. A connecting rod 32 is connected to the piston 3 by a connecting pin 31. A spark plug 43 having an ignition portion 42 facing the combustion chamber 10 is provided to the cylinder head 4. Each of the valves 5 is made of heat-resisting steel and includes a rod-shaped valve stem portion 50 and an umbrella portion 51 flared in a radial direction. The umbrella portion 51 has a valve face 53 facing the combustion chamber 10. A hard facing film may be formed on the valve face 53. The hard facing film may be made of a copper alloy or an iron alloy.

According to this embodiment, employment of the heat insulating coating having high heat insulation and high surface smoothness improves the heat insulation of the combustion chamber and contributes to improvement of the fuel efficiency of the engine. Furthermore, because the surface smoothness of the top of the piston can be improved, it is possible to suppress knocking of the engine. Pressure F in the combustion chamber 10 in an expansion stroke of the engine 1 acts on the heat insulating coating 7f (see FIG. 2). The pressure F is though to be received by the heat insulating coating 7f in which the plurality of hollow nanoparticles are embedded in a dispersed state.

According to this embodiment, because the heat insulation of the combustion chamber 10 of the engine 1 can be improved as described above, thermal efficiency of the engine 1 at the time of cold start is improved and the fuel efficiency of the engine 1 is improved. In general, at the time of the cold start of the engine 1, fuel is not vaporized well and therefore a larger amount of fuel (such as gasoline) than usual is sent into the combustion chamber. However, if the heat insulating coating 7f according to this embodiment is laminated on the top 30 of the piston 3, it is possible to effectively carry out heat insulation of the combustion chamber 10 of the engine 1 to thereby improve vaporization of the fuel to improve the fuel efficiency. Especially in hybrid vehicles and vehicles with idling stop functions which are increasing in number in recent years, the engine 1 is not sufficiently warmed up due to intermittent operation of the engine 1. In this case, the heat insulating coating 7f according to the embodiment exerts the effect and it is easy to maintain the combustion chamber 10 of the engine 1 at high temperature. Moreover, because combustion heat in the combustion chamber 10 is less liable to escape into the piston 3, the cylinder block 2, the cylinder head 4, and the like, combustion temperature in the combustion chamber 10 increases and an effect on reduction of HC (hydrocarbon) included in the exhaust gas can be expected as well. Surface roughness of the heat insulating coating 7f after the application is smaller than surface roughness of the top 30 before the application of the heat insulating coating 7f.

A method of forming the heat insulating coating 7f according to this embodiment will be described. First, paint is prepared by dissolving the resin in solvent to thereby reduce viscosity of the resin, mixing the hollow nanoparticles into the resin, and dispersing the hollow nanoparticles with a disperser. The paint is applied on the top of the piston with a spray or the like to thereby form a coating. Then, in the atmosphere, the coating is baked at predetermined baking temperature (an arbitrary value between 120 to 400°C) for predetermined time (an arbitrary value between 0.5 to 10 hours) to thereby form the heat insulating coating 7f.

### Second embodiment

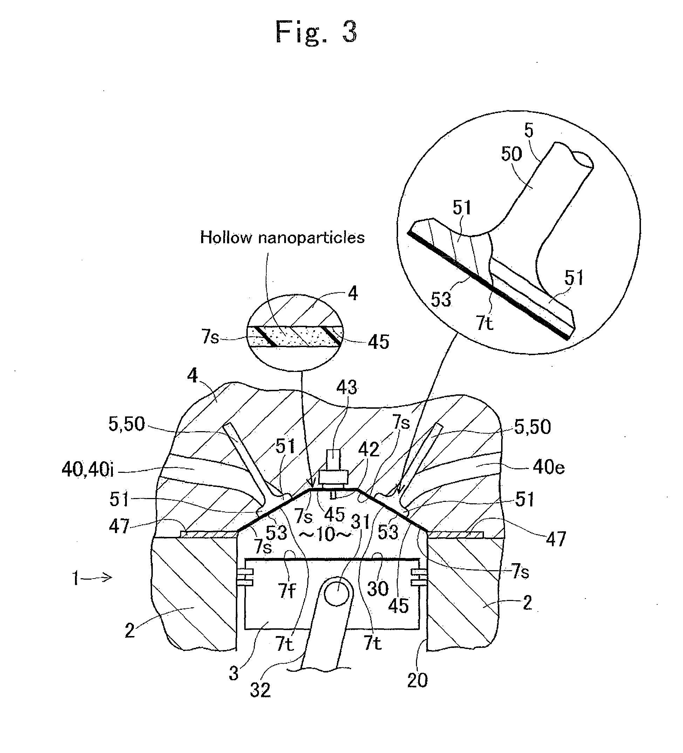

FIG. 3 shows a second embodiment. The present embodiment has basically the same structure, operation, and effects as the first embodiment. FIG. 3 schematically shows a section near a combustion chamber 10 of an engine 10. A first heat insulating coating 7f is applied on a top 30 which is a wall face of the piston 3 and facing the combustion chamber 10. Moreover, a second heat insulating coating 7s is applied on a wall face 45 of a cylinder head 4 and facing the combustion chamber 10. Because the first heat insulating coating 7f and the second heat insulating coating 7s are formed, heat insulation of the combustion chamber 10 is improved. Depending on circumstances, if the second heat insulating coating 7s is formed on the wall face 45 of the cylinder head 4, the first heat insulating coating 7f may be omitted. Surface roughness of the wall faces after the application of the heat insulating coatings 7f and 7s is smaller than surface roughness before the application.

### Third embodiment

The present embodiment has basically the same structure and effects as the first and second embodiments and therefore FIGS. 1 to 3 can be used with modifications. A first heat insulating coating 7f is applied on a top 30 which is a wall face of a piston 3 and facing a combustion chamber 10. Furthermore, a second heat insulating coating 7s is applied on a wall face 45 of the cylinder head 4 and facing the combustion chamber 10. In addition, a third heat insulating coating 7t is formed on a valve face 53 of each of valves 5 and facing the combustion chamber 10. In this manner, the first heat insulating coating 7f is formed on the top 30 of the piston 3, the second heat insulating coating 7s is formed on the wall face 45 of the cylinder head 4 and facing the combustion chamber 10, and the third heat insulating coating 7t is formed on the valve face 53 of each of the valves 5 and facing the combustion chamber 10. Therefore, heat insulation of the combustion chamber 10 is further improved. Surface roughness of the applied heat insulating coatings 7f, 7s, and 7t is smaller than surface roughness of the wall faces such as the top 30, the wall face 45, and the valve faces 53 before the application of the heat insulating coatings 7f, 7s, and 7t.

If thickness of the first heat insulating coating 7f is t1, thickness of the second heat insulating coating 7s is t2, and thickness of the third heat insulating coating 7t is t3, it is possible that t1 = t2 = t3 or t1 ≈ t2 ≈ t3 (t1, t2, and t3 are not shown in FIG. 3). In consideration of suppression of heat escape from the piston 3, it is possible that t1> t2 > t3 or t1 > t2 ≈ t3. In consideration of suppression of heat escape from the cylinder head 4, it is possible that t2> t1 > t3 or t2 > t1 ≈ t3. Projected areas of the valve faces 53 of umbrella portions 51 of the valves 5 projected in a vertical direction are smaller than a projected area of the top 30 of the piston 3 projected in the vertical direction and therefore the third heat insulating coatings 7t may be omitted.

### Forth embodiment

The present embodiment has basically the same structure, operation, and effects as the first to third embodiments and therefore FIGS. 1 to 3 can be used with modifications. Although it is not especially shown in the drawings, a first heat insulating coating 7f is applied on a top 30 of a piston 3 and facing a combustion chamber 10. Moreover, a second heat insulating coating 7s is applied on a wall face 45 of a cylinder head 4 and facing the combustion chamber 10. Therefore, heat insulation of the combustion chamber 10 is improved.

### Example

Examples in which the invention is embodied more will be described below. As Example 1, a heat insulating coating according to the invention was applied on a top of a piston and facing a combustion chamber and was evaluated. Material of the piston was an aluminum-silicon-magnesium-copper-nickel alloy (silicon: 11 to 13% by mass, JIS AC-8A). Thickness of the heat insulating coating was 125 micrometers. As Resin functioning as a binder, non-thermoplastic polyimide was employed. As shown in Table 2, 14 parts by mass of hollow nanoparticles were mixed into 100 parts by mass of resin. As the hollow nanoparticles, silica balloons were employed. Particle diameters of the hollow nanoparticles were in a range of 30 to 150 nanometers, an average particle diameter was 108 nanometers, and thicknesses of shells were 5 to 15 nanometers.

In forming the heat insulating coating according to example 1, paint was prepared by dissolving the resin in solvent (N-methyl-2-pyrrolidone) to thereby reduce viscosity of the resin, mixing the hollow nanoparticles into the resin, and dispersing the hollow nanoparticles with a disperser (ultrasonic disperser). The paint was applied on a top of a piston with a spray or the like to thereby form a coating. Then, the coating was baked at predetermined baking temperature (170 to 190°C) for predetermined time (0.5 to 2 hours) with an electric furnace to thereby form the heat insulating coating.

The average particle diameter of the hollow nanoparticles was obtained by polishing the heat insulating coating with a cross section polisher, observing the heat insulating coating with an electron microscope (FE-SEM), and measuring the average particle diameter of the hollow nanoparticles. The number n of measured particles was 20 and a simple average was obtained. The hollow nanoparticles were mixed so that voidage in the heat insulating coating was 15% by volume when an apparent volume of the heat insulating coating was 100%. In this case, voids formed by shells of the hollow nanoparticles were calculated as the voidage.

The heat insulating coating according to example 1 was evaluated on heat conductivity, surface roughness, antiknock performance, and fuel efficiency and results are shown in Table 2. The fuel efficiency is expressed with respect to fuel efficiency of a prior-art engine which relatively is expressed as 100. Fuel efficiency measurement conditions were as follows. Used Engine
(i) Engine specifications: in-line four-cylinder, water-cooled, DOHC, 16-valve, four-stroke engine, displacement: 1300 cc
(ii) Pistons: the heat insulating coatings according to the invention (125 µm) were formed by application on tops (wall faces of the pistons and facing the combustion chambers) of all of the four pistons.

### Fuel Efficiency Evaluation Conditions

When the engine was in a cold state, average fuel efficiency until engine water temperature increased from room temperature to 88°C was measured. In this case, engine speed was constantly 2500 rpm and a constant load was applied.

Similarly, comparative examples 1 and 2 were evaluated and results are shown in Table 2. In comparative example 1, tops of pistons were not treated and heat insulting coatings including hollow nanoparticles were not formed. In comparative example 2, zirconia was sprayed on tops of pistons to form sprayed films.

As shown in Table 2, in comparative example 1, heat conductivity was 130 (W/mk) and large and surface roughness was 4.82 in terms of Ra. Knocking did not occur and fuel efficiency was expressed as 100 for relative evaluation.

In comparative example 2, heat conductivity of the zirconia sprayed film was 4.0 (W/mk) and was about 25 times larger (4.0 (W/mk)/0.16 (W/mk)) than that in the present example. Surface roughness of the sprayed film was 38 in terms of Ra and was much greater than that in example 1. In the comparative example 2, knocking occurred in the engine and it was impossible to measure fuel efficiency.

In the example 1, on the other hand, heat conductivity of the heat insulating coating was as small as 0.16 (W/mk), about 1.2 × 10⁻³ times (0.16 (W/mk)/130 (W/mk) that in comparative example 1, and about 0.04 times (0.16 (W/mk)/4.0 (W/mk)) that in comparative example 2. Surface roughness of the heat insulating coating in example 1 was 1.79 in terms of Ra and smaller than that in comparative examples 1 and 2. In example 1, knocking did not occur and fuel efficiency was 102.5.

In example 2, heat conductivity of the heat insulating coating was as small as 0.12 (W/mk). Surface roughness of the heat insulating coating in example 2 was 1.86 in terms of Ra and smaller than that in comparative examples 1 and 2. In example 2, knocking did not occur and fuel efficiency was 103.1.

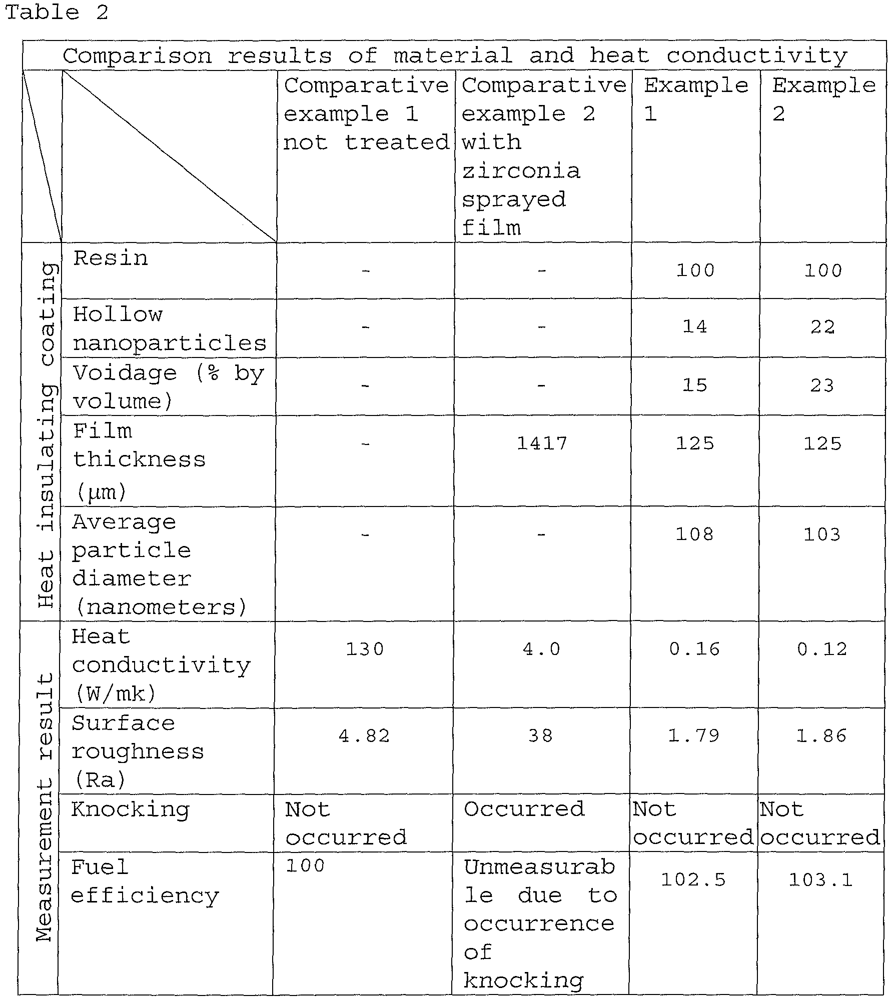

From the above measurement results, it was found that the heat insulating coating according to Example 1 not only substantially reduced the heat conductivity of the top of the piston but also reduced the surface roughness to thereby suppress knocking.

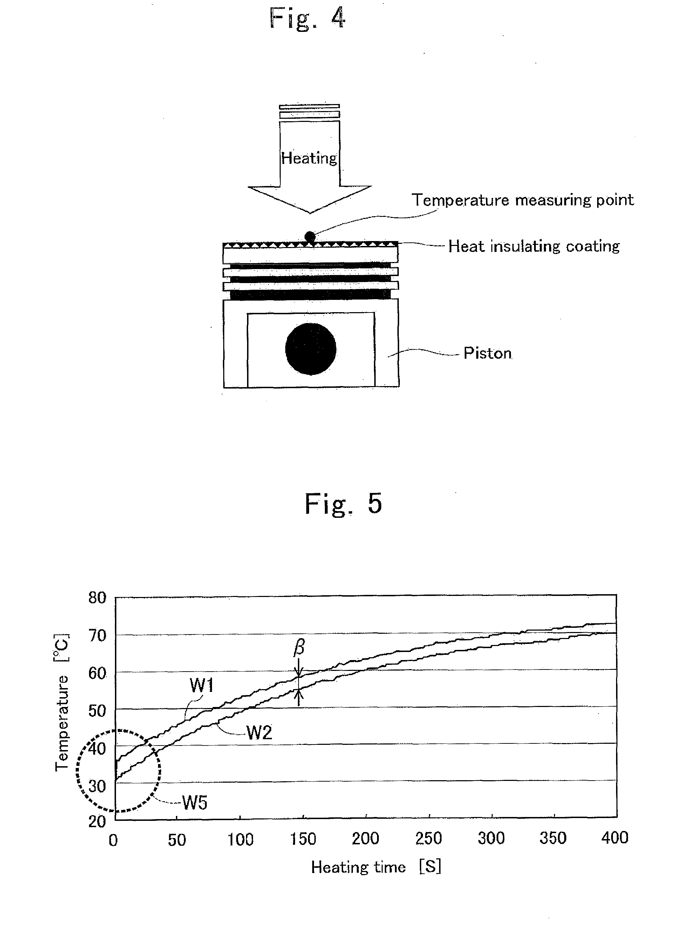

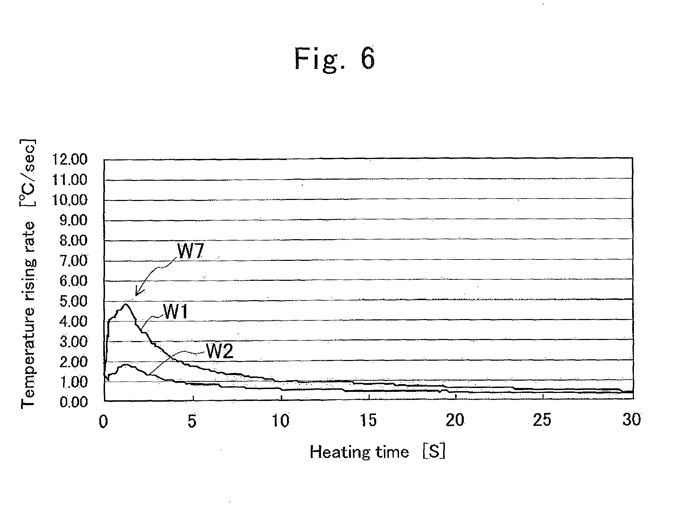

Next, the heat insulating coating according to this Example was formed on a top of a piston and facing a combustion chamber. Then, as shown in FIG. 4, a test was carried out by measuring increase in temperature of the heat insulating coating on the top of the piston while using a heating burner as a source of heat and continuing heating of the top face of the piston from the side of the heat insulating coating. Measurement results are shown in FIGS. 5 and 6. In FIGS. 5 and 6, a characteristic line W1 shows a piston according to the invention and a characteristic line W2 shows a piston according to prior art. In the piston according to the invention, as shown in an area W5 in FIG. 5, it was found that an initial temperature rise was quicker than in the piston according to the prior art and heat insulation of the top of the piston was high. Moreover, after heating time continued, temperature of the piston according to the invention was higher by temperature β than that of the piston according to the prior art.

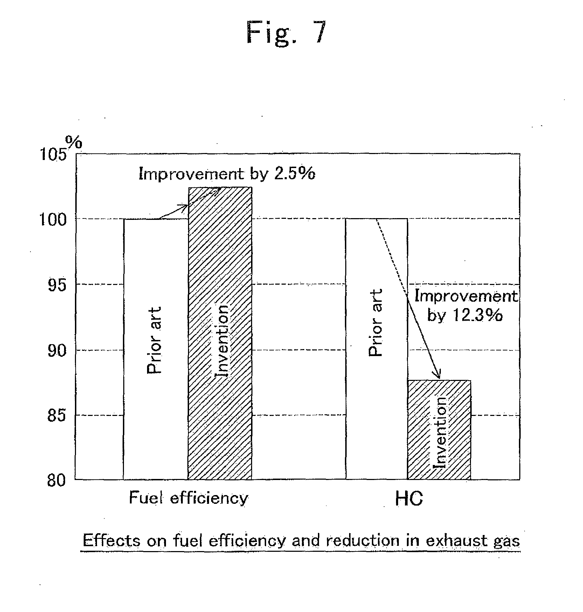

Furthermore, as shown by an arrow W7 in FIG. 6, it was found that a temperature rising rate of the top of the piston increased in a shorter time from the start of heating in the piston according to the invention than in the piston according to the prior art. As a result, vaporization of fuel in the combustion chamber is facilitated immediately after starting of the engine and in a cold state of the engine and therefore fuel efficiency of the engine is improved. FIG. 7 shows the fuel efficiency and an amount of HC in exhaust gas of the engine according to the invention, to which the piston having the heat insulating coating according to example 1 is applied, in comparison with those of the engine according to the prior art. By providing the heat insulating coating on the top of the piston, the fuel efficiency increased by 2.5% and HC which was a harmful substance included in the exhaust gas reduced by 12.3% by mass as compared with the engine according to the prior art.

### Others

Although the first heat insulating coating 7f is formed on the entire area of the top 30 of the piston 3 in first embodiment, it may be formed on only part of the top 30. The invention is not limited to the above-described embodiments and examples shown in the drawings but may be suitably changed and carried out without departing from the gist.

### INDUSTRIAL APPLICABILITY

By applying the heat insulating coating on the wall face of at least one of the piston, the cylinder head, and the valves and facing the combustion chamber, the invention can improve the heat insulation of the combustion chamber, contribute to improvement of the fuel efficiency of the engine, and suppress knocking of the engine. Therefore, the invention can be applied especially to the hybrid vehicle or the like in which the engine is not sufficiently warmed up due to the intermittent operation of the engine.

### EXPLANATION OF REFERENCE NUMERALS

- 1 :: Engine
- 10:: Combustion chamber
- 2 :: Cylinder block
- 20:: Bore
- 3 :: Piston
- 30:: Top
- 4 :: Cylinder head
- 40:: Valve bore
- 5 :: Valve
- 7f:: Heat insulating coating

## Claims

1. An engine including a cylinder block having a bore, a piston fitted into the bore so as to form a combustion chamber and to be able to reciprocate, a cylinder head for closing the combustion chamber and having a valve bore communicating with the combustion chamber, and a valve for opening and closing the valve bore, wherein:
a heat insulating coating is applied on a wall face of at least one of the piston, the cylinder head, and the valve and facing the combustion chamber; and
the heat insulating coating includes resin and a plurality of hollow nanoparticles embedded in the resin, smaller in diameter than a thickness of the heat insulating coating, and smaller than or equal to 500 nanometers in size.

2. The engine according to claim 1, wherein the thickness of the heat insulating coating is 10 to 2000 micrometers and the size of the hollow nanoparticles is 10 to 500 nanometers.

3. The engine according to claim 1 or 2, wherein, if apparent volume of the heat insulating coating is 100%, voidage in the heat insulating coating is 5 to 50% by volume.

4. The engine according to any one of claims 1 to 3, wherein the resin is at least one of epoxy resin, amino resin, polyaminoamide resin, phenol resin, xylene resin, furan resin, silicone resin, polyetherimide, polyether sulfone, polyether ketone, polyether ether ketone, polyamideimide, polybenzimidazole, thermoplastic polyimide, and non-thermoplastic polyimide.

5. The engine according to any one of claims 1 to 4, wherein surface roughness of the wall face after application of the heat insulating coating is smaller than the surface roughness before the application.

6. The engine according to claim 5, wherein the surface roughness of the heat insulating coating is smaller than or equal to 10.0 in terms of Ra.

7. The engine according to any one of claims 1 to 6, wherein the heat insulating coating includes at least one of a dispersant, a silane coupling agent, a leveling agent, a surfactant, and a thickener as an additive in addition to the resin and the hollow nanoparticles.

8. The engine according to any one of claims 1 to 7, wherein the hollow nanoparticles are at least one of silica (SiO₂), alumina (Al₂O₃), zirconia (ZrO₂), and titania (TiO₂).

9. A piston to be fitted into a bore so as to form a combustion chamber and to be able to reciprocate, wherein:
a heat insulating coating is applied on a wall face of the piston and facing the combustion chamber; and
the heat insulating coating includes resin and a plurality of hollow nanoparticles embedded in the resin, smaller in diameter than a thickness of the heat insulating coating, and smaller than or equal to 500 nanometers in size.

10. The piston according to claim 9, wherein surface roughness of the wall face after application of the heat insulating coating is smaller than the surface roughness before the application.
